# EUROPÄISCHE PATENTANMELDUNG

(11) **EP 0 883 304 A2**
(43) Veröffentlichungstag der Anmeldung: **09.12.1998**
(21) Anmeldenummer: 98107578.1
(22) Anmeldetag: 25.04.1998
(51) Int. Cl.: H04Q 1/02

(54) **Schnittstellenmodul**

(30) Priorität: 04.06.1997 DE 19724478
(71) Anmelder: KRONE Aktiengesellschaft, 14167 Berlin (DE)
(72) Erfinder: Gerke, Dieter, 13509 Berlin (DE)

(57) **Zusammenfassung**

Die Erfindung bezieht sich auf ein Schnittstellenmodul für Übergabepunkte in Telekommunikations- und Datennetzen.

Die Aufgabe der Erfindung, ein gattungsgemäßes Schnittstellenmodul zu entwickeln, welches eindeutige Zuständigkeitsbereiche definiert und diese gegeneinander sicher abgrenzt sowie gewährleistet, daß nur die jeweils Berechtigten Zugriff zu den jeweiligen Bereichen haben, wird dadurch gelöst, daß zwei zueinander getrennte Zuständigkeitsbereiche I,II vorgesehen sind, die untereinander gegen einen unberechtigten Zugriff gesichert sind, wobei jeder Zuständigkeitsbereich I,II mindestens einen Abschluß 1,2 und mindestens einen Abgriff 3,4,5,6 aufweist.

## Beschreibung

Die Erfindung bezieht sich auf ein Schnittstellenmodul für Übergabepunkte in Telekommunikations- und Datennetzen entsprechend dem Oberbegriff des Anspruchs 1.

In der traditionellen Gestaltung von Fernmeldenetzen wurde ein komplettes Kupferverbindungsnetz komplett vom Fernmeldeamt bis zur Anschlußdose inklusive eines dazugehörigen Telefons von einem Netzbetreiber erstellt und gewartet. Die zukünftigen Telekommunikations- und Datennetze sind Verbindungsnetze aus Kupferkabeln, Glasfaserkabeln und Kombinationen daraus und einem Privatbereich mit einem vielfältigen Endgeräteprogramm unterschiedlichster Ausführungsarten.

Es ist allgemein bekannt, daß Telekommunikations- und Datennetze von den jeweiligen Netzbetreibern beim Teilnehmer mit einer Anschlußdose, z.B einer TAE-Anschlußdose (**T**elekommunikations-**A**nschluß-**E**inheit), abgeschlossen werden, in der Mittel zum Anschluß von Endgeräten der Kommunikationstechnik durch den Teilnehmer enthalten sind (im allgemeinen eine bis drei Buchsen). An dieser Schnittstelle Netzbereich/Teilnehmer (Übergabepunkt) erfolgt auch die Trennung der Verantwortungsbereiche.

Der gesamte Bereich bis einschließlich der TAE-Dose beim Teilnehmer liegt im Verantwortungsbereich des Netzbetreibers, der Bereich danach liegt im Verantwortungsbereich des Teilnehmers. Entsprechend aufgeteilt sind die Zuständigkeitsbereiche für die Wartung, Pflege, Störungsbeseitigung der Anlagen und Geräte.

Mit zunehmender Privatisierung der Netze ergeben sich Probleme bei der Abgrenzung der Verantwortlichkeiten hinsichtlich der Wartung, Pflege der Netze und der Zugriffsberechtigungen zu Anlagen und Geräten, einschließlich von mißbräuchlicher Benutzung.

Die Telekommunikations- und Datennetze werden zunehmend in die Verantwortung der Netzbetreiber, der Dienstebetreiber wie ISDN (Diensteintegrierendes digitales Fernmeldenetz), ADSL (Asymmetric Digital Subscriber Line) oder dgl. und der Teilnehmer zu untergliedern sein.

Um hier eindeutige Verhältnisse zu schaffen, sind technische Einrichtungen zu schaffen, die Verantwortungsbereiche definieren.

Der Erfindung liegt die Aufgabe zugrunde, ein Schnittstellenmodul zu entwickeln, welches eindeutige Zuständigkeitsbereiche definiert und diese gegeneinander sicher abgrenzt sowie gewährleistet, daß nur die jeweils Berechtigten Zugriff zu den jeweiligen Bereichen haben.

Zur Lösung dieser Aufgabe sieht die Erfindung die Merkmale des Anspruchs 1 vor. Die zueinander abgeschlossenen Zuständigkeitsbereiche mit ihren Schnittstellen gewährleisten durch die einzusetzende Meß- und Prüftechnik, daß Störungen und Probleme eindeutig zugeordnet werden können. Es wird verhindert, daß Probleme von einem Zuständigkeitsbereich in einen anderen Zuständigkeitsbereich weitergeleitet werden können. Es kann zum Beispiel eine Überwachungsvorrichtung an der Schnittstelle des Teilnehmers integriert werden, die den Netzbetreiber oder den Dienstebetreiber in die Lage versetzt, den Nutzer mit geringem technischen Aufwand von unberechtigten Kosten durch Fremdeingriffe zu entlasten. Es wird eine wirtschaftliche Pflege und Wartung gewährleistet.

Weitere vorteilhafte Ausgestaltungen der Erfindung ergeben sich aus den Unteransprüchen.

Die Erfindung ist nachfolgend anhand eines Ausführungsbeispieles eines Schnittstellenmoduls näher erläutert. Es zeigen :
- Fig. 1: die schematische Darstellung einer typischen Netzkonfiguration,
- Fig. 2: die schematische Darstellung eines Schnittstellenmoduls und
- Fig. 3: die schematische Darstellung des Schnittstellenmoduls in der Ausführung als Anschlußleiste.

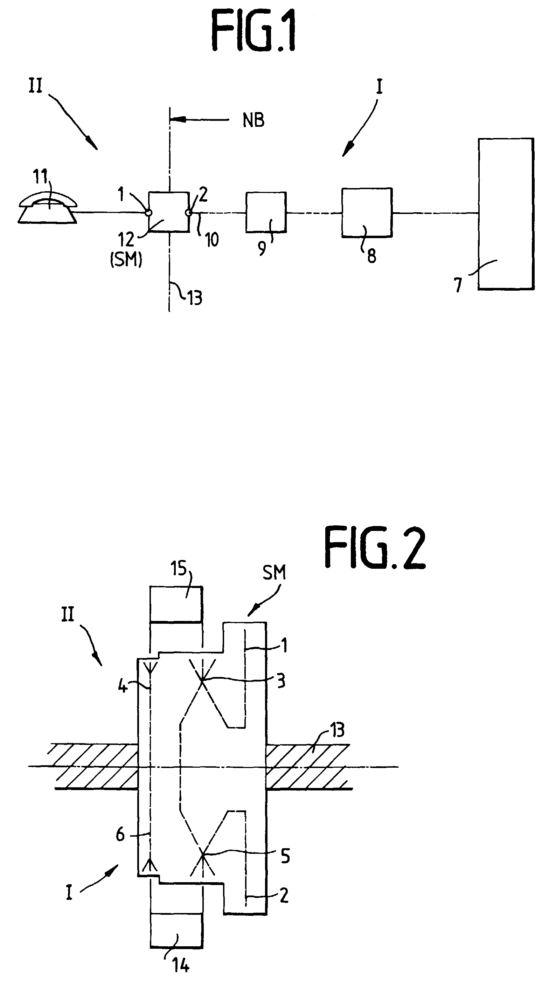

In der Fig. 1 ist eine typische Netzkonfiguration im Teilnehmeranschlußbereich dargestellt, wie diese heute im Netz der deutschen Telekom anzutreffen ist.

Von einer Ortsvermittlungsstelle 7 führt ein Kabelstrang zu einem Kabelverzweiger 8, von dem weitere Kabel zu einem Endverzweiger 9 führen und mit welchem wiederum weitere nicht dargestellte Endverzweiger 9 verbunden sein können. Vom Endverzweiger 9 erfolgt über ein Leitungspaar 10 die Verbindung zu einem Teilnehmer 11 über eine TAE-Dose 12.

Die TAE-Dose 12 wird durch ein erfindungsgemäßes Schnittstellenmodul SM gemäß Fig. 2 ersetzt.

Das Schnittstellenmodul SM besteht entsprechend der Darstellung in der Fig. 2 im wesentlichen aus zwei Zuständigkeitsbereichen I,II, die unabhängig voneinander zugänglich sind. Es können auch zwei voneinander getrennte Gehäusehälften vorgesehen sein.

Der Zuständigkeitsbereich I liegt in der Verantwortung des Netz- oder des Dienstebetreibers NB gemäß der Fig. 1. Das bedeutet, daß die Zuständigkeit für die Wartung, Pflege, Instandhaltung aller Anlagen und Leitungen des Netzes mit den Trennstellen (Abgriffe) 5,6 und dem Abschluß 2 beendet ist. Die Trennstellen (Abgriffe) 3,4 und der Anschluß 1 definieren den Beginn des Zuständigkeitsbereiches II des Teilnehmers 11 nach Fig. 1. Ab hier ist der Teilnehmer 11 für die Wartung, Pflege und Instandhaltung der angeschlossenen Geräte und der eventuell angeschlossenen internen Leitungsnetze verantwortlich.

Das Schnittstellenmodul SM gemäß der Fig. 2 bildet ein Abschlußgerät, welches folgende Anforderungen erfüllt:
- Abschluß 2 einer Kupferader oder Glasfaser mit entsprechender Elektronik (Bereich I Netzbetreiber)
- Abgriff 5 für Zubehörelemente, z.B. Schutzelemente, Ferntestmeßeinrichtung 14 mit Erdabgriff 6,
- Anbriff 3 für Schutzkomponenten 15 wie Sicherungen, Überspannungsschutzeinrichtungen und Komponenten für Fremdeinflüsse in beiden Richtungen mit Erdabgriff 4,
- Anschluß 1 einer Kupferader oder Glasfaser mit entsprechender Elektronik für den Teilnehmer 11 (Endgerätebetreiber, Privat-Bereich II)

Der Aufbau dieser "4-Funktionseinheit" in zwei separaten Zuständigkeitsbereichen I,II gibt die Möglichkeit der deutlichen Unterteilung in entsprechenden Gehäusen und der Verhinderung des unberechtigten Zugriffs nach beiden Seiten sowie Erdanschlußmöglichkeiten 4,6 für diverse Schutzkomponenten entsprechend der Anwendung.

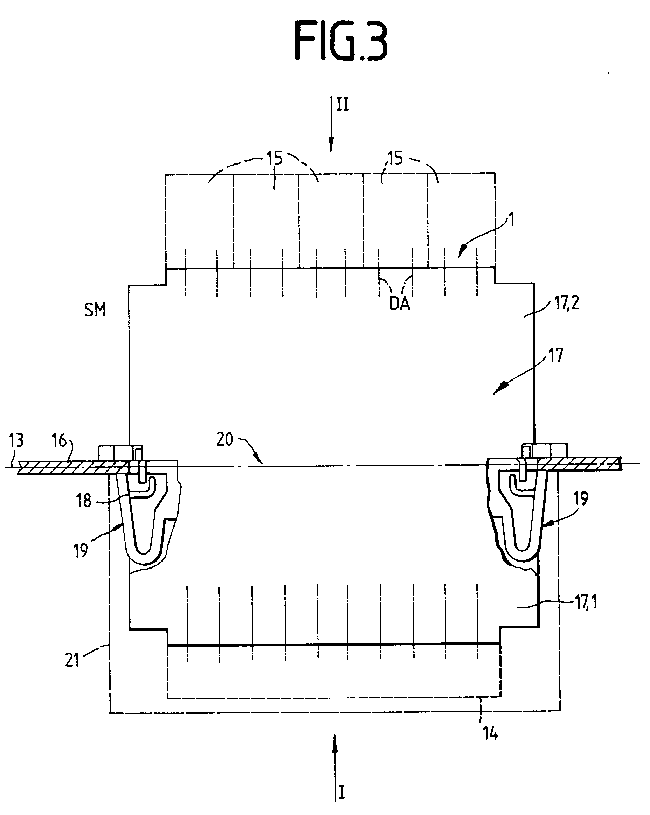

In der Fig. 3 ist die beispielhafte Ausführung des Schnittstellenmoduls SM nach Fig. 2 als Leiste 17 mit Schneid-Klemm-Anschlußtechnik gezeigt, wobei für die Teilnehmerseite II ein Leistenteil 17.2 und für die Netzbetreiberseite I ein Leistenteil 17.1 vorgesehen sind. Es ist die beispielhafte Ausführung für fünf Teilnehmerleitungen 1 (fünf Doppeladern DA) gezeigt. Die Trennung 13 der Zuständigkeitsbereiche I,II erfolgt hier durch eine Montageplatte 16 mit einem Durchbruch 20, auf die beide Leistenteile 17.1 und 17.2 als eine einheitliche Leiste 17 von der Teilnehmerseite II her über eine Verriegelungsvorrichtung 19 aufgerastet werden.

Die Verriegelungsvorrichtung 19 besteht aus einem Rasthaken 18 und dem dazugehörigen Durchbruch 20 in der Montageplatte 16. Das Lösen der Verriegelungsvorrichtung 19 ist von der Teilnehmerseite II nicht möglich, ohne zum Beispiel eine Verplombung einer gehäuseartigen Einrichtung 21 auf der Netzbetreiberseite I unberechtigt zu Zerstören.

Das Ein- und Ausrasten der Leiste 17 eines Moduls SM ist immer nur von einer Seite möglich, so daß ein Manipulieren von der Gegenseite erschwert ist. Die Entriegelung der Leiste 17 über die Verriegelungsvorrichtung 19 ist bei der Ausführung nach der Fig. 3 jedoch nur von der Netzbetreiberseite I her möglich.

Bei Schnittstellenmodulen SM mit mehreren Teilnehmern 1 kann eine Plombierung der einzelnen Teilnehmerabgriffe erfolgen (nicht dargestellt). Alle Abgriffe 1 bis 6 nach Fig. 2 werden in der Leiste 17 realisiert.

Das Schnittstellenmodul SM ist aneinanderreihbar und stapelfähig ausgestaltet.

### BEZUGSZEICHENLISTE

- 1: Teilnehmeranschluß
- 2: Netzbetreiberabschluß
- 3: Trennstelle (Abgriff)
- 4: Erdleitung
- 5: Trennstelle (Abgriff)
- 6: Erdleitung
- 7: Ortsvermittlungsstelle
- 8: Kabelverzweiger
- 9: Endverzweiger
- 10: Leitungspaar
- 1: 1 Teilnehmer
- 12: TAE-Dose
- 13: Trennung der Zuständigkeitsbereiche
- 14: Ferntestmeßeinrichtung
- 15: Schutzkomponente
- 16: Montageplatte
- 17: Leiste
- 17.1: Leistenteil Netzbetreiber
- 17.2: Leistenteil Teilnehmer
- 18: Rasthaken
- 19: Verriegelungsvorrichtung
- 20: Durchbruch
- 21: gehäuseartige Einrichtung
- DA: Doppelader
- NB: Netzbetreiber
- SM: Schnittstellenmodul
- I,II: Verantwortungsbereich

## Patentansprüche

1. Schnittstellenmodul für Übergabepunkte in Telekommunikations- und Datennetzen,
**dadurch gekennzeichnet,** daß
zwei zueinander getrennte Zuständigkeitsbereiche (I,II) vorgesehen sind, die untereinander gegen einen unberechtigten Zugriff gesichert sind,
wobei jeder Zuständigkeitsbereich (I,II) mindestens einen Abschluß (1,2) und mindestens einen Abgriff (3,4,5,6) aufweist.

2. Schnittstellenmodul nach Anspruch 1, dadurch gekennzeichnet, daß der Zuständigkeitsbereich (I) des Netz- bzw. des Dienstebetreibers einen Abgriff (5) für Zubehörelemente wie Ferntestmeßeinrichtung oder dgl. und einen weiteren Abgriff (6) für Schutzkomponenten wie Sicherungen, Komponenten für Fremdeinflüsse in beiden Richtungen aufweist.

3. Schnittstellenmodul nach Anspruch 1, dadurch gekennzeichnet, daß der Zuständigkeitsbereich (II) des Teilnehmers einen Abschluß (1) zum Betreiben von Endgeräten mit entsprechender Elektronik und eine Anschlußmöglichkeit (3,4) für diverse Schutzkomponenten aufweist.

4. Schnittstellenmodul nach den Ansprüchen 2 und 3, dadurch gekennzeichnet, daß die Abgriffe (3,5) wahlweise als Trenn- oder als schaltabgriffe ausgeführt sind.

5. Schnittstellenmodul nach den Ansprüchen 1 bis 4, dadurch gekennzeichnet, daß die Zuständigkeitsbereiche (I,II) als Anschlußleiste (17) mit Schneid-Klemm-Anschlußtechnik ausgebildet und auf eine Montageplatte (16) aufgerastet sind, wobei eine Entriegelung nur von der Netzbetreiberseite (I) her möglich ist.

6. Schnittstellenmodul nach den Ansprüchen 1 bis 5, dadurch gekennzeichnet, daß der Zuständigkeitsbereich des Netzbetreibers (I) eine gehäuseartige Einrichtung (21) aufweist und verplombt ist.

7. Schnittstellenmodul nach den Ansprüchen 1 bis 6, dadurch gekennzeichnet, daß die Zuständigkeitsbereiche (II) unterschiedlicher Teilnehmer durch plombierbare gehäuseartige Einrichtungen getrennt sind.
